Europäisches Patentamt

European Patent Office

Office européen des brevets

(19)

(11) Veröffentlichungsnummer: **0 185 883**
B1

# EUROPÄISCHE PATENTSCHRIFT

(45) Veröffentlichungstag der Patentschrift:
20.12.89

(21) Anmeldenummer: 85113561.6

(22) Anmeldetag: 25.10.85

(51) Int. Cl.⁴: **B 23 B 5/22**, B 23 B 31/36

(54) Kraftbetätigtes Backenspannfutter.

(30) Priorität: 21.12.84 DE 3446687

(43) Veröffentlichungstag der Anmeldung:
02.07.86 Patentblatt 86/27

(45) Bekanntmachung des Hinweises auf die Patenterteilung:
20.12.89 Patentblatt 89/51

(84) Benannte Vertragsstaaten:
AT CH FR GB IT LI SE

(56) Entgegenhaltungen:
EP-A- 0 022 145
FR-A- 2 149 740
US-A- 1 817 721

(73) Patentinhaber: Röhm, Günter Horst,
Heinrich-Röhm-Strasse 50, D-7927 Sontheim (DE)

(72) Erfinder: Röhm, Günter Horst,
Heinrich-Röhm-Strasse 50, D-7927 Sontheim (DE)

(74) Vertreter: Fay, Hermann, Dipl.-Phys. Dr.,
Ensingerstrasse 21 Postfach 1767, D-7900 Ulm (Donau)
(DE)

## Beschreibung

Die Erfindung betrifft ein kraftbetätigtes Backenspannfutter für exzentrisch zu spannende Werkstücke, insbesondere Kurbelwellen, mit einer axial auf einer Drehmaschinenspindel befestigbaren Futterbasis, einem Spannkopf, der radial zu einer mit der Drehachse parallelen Spannachse verschiebbar geführte und über axial bewegliche Keilstangen an einen in der Futterbasis axial verstellbaren Treibkolben angeschlossene Spannbacken und einen Spannkopfkörper aufweist, der quer zur Drehachse und parallel zu der durch die Drehachse und die Spannachse gehenden Ebene verschiebbar an der Futterbasis geführt ist, und mit in gleicher Richtung wie der Spannkopfkörper verstellbaren Unwuchtausgleichsgewichten.

Bekannte Backenspannfutter dieser Art ermöglichen es, durch Verschieben des Spannkopfes an der Futterbasis beispielsweise Kurbelwellen bei im wesentlichen gleichbleibendem Spanndurchmesser, jedoch verschiedenen Kurbelhüben auf einer Drehmaschine zu bearbeiten. Eine Anpassung an andere Spanndurchmesser ist allerdings durch Austauschen von an den Spannbacken auswechselbaren Aufsatzbacken möglich. Die Futterbasis ist im Prinzip ein den Anschluß an die Drehmaschinenspindel ermöglichender Futterflansch, an dem der Spannkopf verschiebbar geführt und in seiner Führung dadurch feststellbar ist, daß er mittels einer Stellspindel über ein seine Stellung bestimmendes Distanzstück gegen die Futterbasis verspannt wird. Im Spannkopf sind die Spannbacken und die Keilstangen geführt, die axial formschlüssig, jedoch in Verstellrichtung des Spannkopfes verschiebbar an einer sie mit dem Treibkolben verbindenden und am Treibkolben festen Spannplatte eingehängt sind. Im Spannkopf befindet sich im übrigen eine das Werkstück vor seiner Einspannung ausrichtende Werkstückaufnahme mit einem Richtbackenpaar, dessen bewegliche Richtbacke ebenfalls am Spannkopf geführt ist. Zur Betätigung dieser Richtbacke dient eine eigene axial bewegliche Keilstange, die ähnlich den Keilstangen für die Spannbacken verschiebbar an einer zweiten Spannplatte eingehängt ist, die fest an einen zum Antrieb nur der Richtbacke vorgesehenen zweiten Treibkolben angeschlossen ist, der koaxial zum Spannkolben für die Spannbacken und zur Drehachse der Futterbasis in letzterer geführt ist. Im Ergebnis bildet der Spannkopf bis auf die Spannplatten und die Treibkolben ein komplettes Backenspannfutter, das entsprechend dem Kurbelhub des Werkstückes an der Futterbasis verstellbar ist. Die Unwuchtausgleichsgewichte sind am Spannkopf verschiebbar geführt. Sie dienen dazu, die durch Verschiebung des Spannkopfes an der Futterbasis entstehenden Unwuchten möglichst zu kompensieren, wozu sie am Spannkopf gegenläufig zu dessen eigener Verschiebung verstellt und in ihrer jeweiligen Stellung wiederum mittels einer Spindel über passende Distanzstücke gegen den Spannkopf verspannt werden. – Spannfutter dieser Art besitzen den Nachteil, daß die Masse des verstellbaren Spannkopfes verhältnismäßig groß ist, daß die Massen der Unwuchtausgleichsgewichte in gleichem Maße groß sein müssen, und daß daher auch die letztenendes immer verbleibenden Restunwuchten, die von den Lagern der Drehmaschinenspindel aufgenommen werden müssen, entsprechend groß sind und die Spindellager hoch belasten. Des weiteren ist die Einstellung des Spannkopfes und der Unwuchtausgleichgewichte umständlich und aufwendig, da diese Einstellungen jeweils eigene Arbeitsgänge bedingen und außerdem die nach jeweils geschehener Einstellung erfolgende Verspannung zur Fixierung der Einstellung einen weiteren eigenen Arbeitsgang erfordert, der oft nicht ohne Rückwirkung auf die Einstellung selbst bleibt.

Der Erfindung liegt die Aufgabe zugrunde, ein Backenspannfutter der eingangs genannten Art so auszubilden, daß die Massen des Spannkopfes und der Unwuchtausgleichgewichte und damit die Restunwuchten, aber auch die Masse des Backenspannfutters insgesamt, möglichst klein sind, und daß die gegenseitige Einstellung des Spannkopfes und der Unwuchtausgleichgewichte zur Unwuchtkompensation möglichst einfach wird.

Diese Aufgabe wird nach der Erfindung dadurch gelöst, daß der Spannkopfkörper als Schieber ausgebildet ist, dessen Breite quer zur Verschiebungsrichtung kleiner als der Durchmesser der Futterbasis ist, daß die beidseits des Spannkopfkörpers an der Futterbasis angeordneten und geführten Unwuchtausgleichsgewichte durch je ein Getriebe gegenläufig mit dem Spannkopfkörper verbunden sind, und daß die Spannbacken mit gegenüber der des Spannkopfkörpers geneigter Verschiebungsrichtung in ein inneres Backenteil und ein äußeres Backenteil getrennt sind, von welchen das innere Backenteil im Spannkopfkörper und das äußere Backenteil mit der an ihm angreifenden Keilstange in der Futterbasis geführt sind und beide Backenteile in einer durch Hinterschneidung formschlüssigen und parallel zur Verschiebungsrichtung des Spannkopfkörpers verlaufenden Geradführung miteinander im Eingriff stehen.

Bei dem erfindungsgemäßen Backenspannfutter bilden die äußeren Backenteile und die zu ihnen gehörenden Keilstangen keine Teile des Spannkopfes, nehmen also auch an dessen Verschiebung nicht teil und leisten somit keinen Beitrag zur Unwucht. Äußere und innere Backenteile sind mit dem Spannkopf gegeneinander in den sie verbindenden Geradführungen, beispielsweise Schwalbenschwanz- oder T-Nutführung, verschiebbar, in der Verstellrichtung der Spannbacken selbst aber formschlüssig aneinander gekuppelt, so daß die inneren Backenteile an jeder Verstellbewegung der äußeren Backenteile unabhängig von der Einstellung des Spannkopfes an der Futterbasis teilnehmen müssen. Durch die Anordnung und Führung der äußeren Backenteile an der Futterbasis kann der nur die inneren Backenteile enthaltende Spannkopfkörper entsprechend schmal und leicht an Masse ausgebildet werden, so daß die entsprechend ebenfalls kleineren Unwuchtausgleichsgewichte beidseits neben dem Spannkopfkörper Platz finden und an der Futterbasis angeordnet und geführt werden können, wodurch sich insgesamt eine vorteilhaft massearme, kompakte und platzsparende Bauweise ergibt. Darüber hinaus ermöglicht dies die Getriebeverbindung des Spannkopfkörpers mit den Unwuchtausgleichsgewichten, so daß letztere sich bei Änderungen der Spannkopfeinstellung entsprechend selbsttätig verstellen und so automatisch die Unwuchtkompensation bewirken.

Eine bevorzugte Ausführungsform der Erfindung ist dadurch gekennzeichnet, daß bei Führung einer der Spannbacken in derselben Richtung wie der Spannkopfkörper diese Spannbacke ohne Trennung in inneres und äußeres Backenteil einstückig ausgebildet und mit ihrer Keilstange nur im Spannkopfkörper geführt ist, und daß ihre Keilstange axial formschlüssig, in Verschiebungsrichtung des Spannkopfkörpers aber verschiebbar, an einer auch die Keilstangen für die anderen Spannbacken mit ihrem Treibkolben verbindenden Spannplatte eingehängt ist. Weiter empfiehlt es sich, daß bei einem Spannkopf mit beweglicher Richtbacke, deren Verstellrichtung dann in der Regel quer zur Verschiebungsrichtung des Spannkopfes liegt, auch diese Richtbacke in ein im Spannkopfkörper geführtes inneres Backenteil und in ein äußeres Backenteil getrennt ist, das mit seiner Keilstange und einem die Richtbacke betätigenden Treibkolben in der Futterbasis geführt und mit dem inneren Backenteil in einer durch Hinterschneidung formschlüssigen und parallel zur Verschiebungsrichtung des Spannkopfkörpers verlaufenden Geradführung im Eingriff steht. Auch empfiehlt es sich, daß die äußeren Backenteile, in Verschiebungsrichtung des Spannkopfes gesehen, um mindestens dessen Verschiebungshub breiter als die inneren Backenteile sind und letztere bei offenem Spannfutter in die Führungsaussparungen für die äußeren Backenteile eintreten.

Nach einem weiteren sehr vorteilhaften Vorschlag der Erfindung ist der Spannkopfkörper in seiner Schieberführung mittels einer axial unverschiebbar und spielfrei an der Futterbasis gelagerten Stellspindel verstellbar, die in einer axial spielfrei und undrehbar im Spannkopfkörper angeordneten Spindelmutter läuft, welche in einer Durchmesserebene zweigeteilt und mittels einer die Spindelmutter umschließenden druckmittelbetätigten Klemmhülse radial auf der Stellspindel zusammendrückbar ist. Bei gelöster Spindelmutter kann durch externes Drehen der Stellspindel der Spannkopf in die gewünschte Stellung verschoben werden. Durch Schließen der Klemmhülse werden die beiden Spindelmutterteile auf der Stellspindel zusammengedrückt, wodurch jedes freie Spiel zwischen den Gewindegängen der Stellspindel und der Spindelmutter ausgeschaltet wird. Dazu empfiehlt es sich besonders, das Gewinde von Stellspindel und Spindelmutter als Trapezgewinde auszubilden. Die beiden Spindelmutterteile liegen zweckmäßig stirnseitig beidseits über ihre Radialbewegungen ermöglichende Kugeln am Spannkopfkörper an und weisen Radialnuten auf, in die am Spannkopfkörper feste Sicherungsnocken zwischen den Kugeln hindurch eingreifen und die Spindelmutterteile gegen Drehung fixieren. Zusätzlich zu der Klemmung der Spindelmutter auf der Stellspindel empfiehlt es sich, daß die Schieberführung des Spannkopfkörpers in der Futterbasis schwalbenschwanzartig ausgebildet ist und den Keilflächen des Schwalbenschwanzes distanzüberbrückende Keilleisten anliegen, die mittels druckmittelbetätigter Klemmleisten zwischen der Futterbasis und dem Spannkopfkörper quer zu seiner Verschiebungsrichtung verspannbar sind. Dies ergibt eine Klemmung des Spannkopfkörpers in reaktionsfreier Weise, also frei von Rückwirkungen auf die durch die Stellspindel erreichte Positioniergenauigkeit für den Spannkopf.

Vorzugsweise ist das Getriebe zwischen dem Spannkopfkörper und den Unwuchtausgleichsgewichten durch je ein in der Futterbasis achsenparallel zur Drehachse gelagertes Zahnrad gebildet, das am Spannkopfkörper und am Unwuchtausgleichsgewicht in in deren Verschiebungsrichtung verlaufenden Zahnreihen im Eingriff steht. Um ein «Aufschwingen» der Unwuchtausgleichsgewichte zu verhindern, sind druckmittelbetätigte Klemmscheiben vorgesehen, welche die Unwuchtausgleichsgewichte in ihrer Führung in der Futterbasis axial gegen letztere verspannen und dadurch im Reibungssitz feststellen. Die Klemmscheiben und die Klemmleisten können aus derselben Druckmittelversorgungsleitung gespeist werden. Jedoch müssen die Klemmleisten und Klemmscheiben einerseits und die Klemmhülse andererseits getrennt voneinander mit dem Druckmittel angesteuert werden können.

Im folgenden wird die Erfindung an einem in der Zeichnung dargestellten Ausführungsbeispiel näher erläutert; es zeigen:

Fig. 1 eine Stirnansicht eines Backenspannfutters nach der Erfindung von der Vorderseite,

Fig. 2 den Schnitt II–II in Fig. 11,

Fig. 3 den Schnitt III–III in Fig. 1,

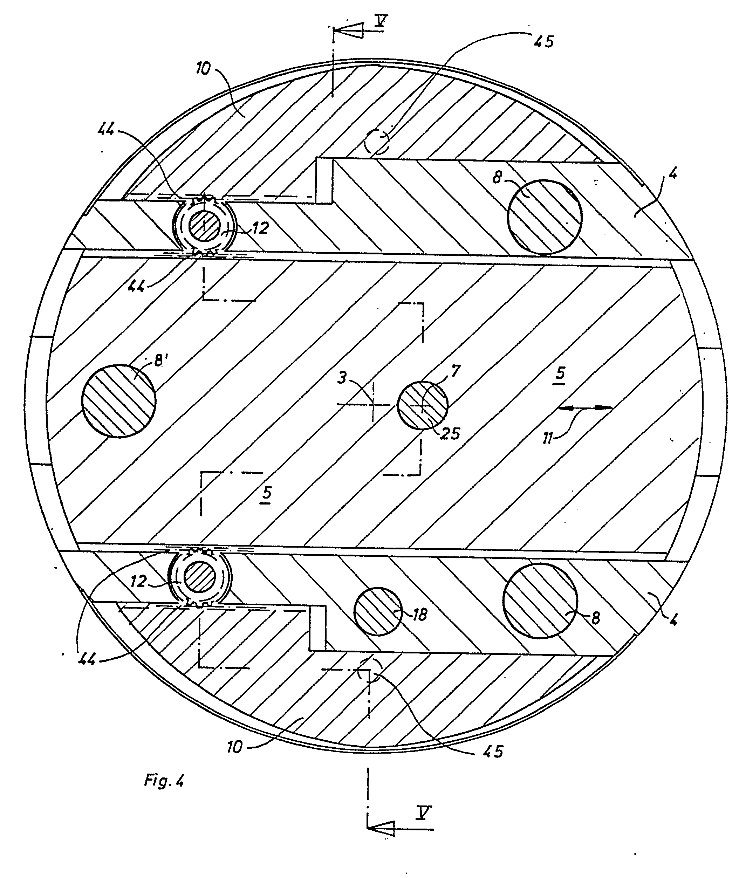

Fig. 4 den Schnitt IV–IV in Fig. 2,

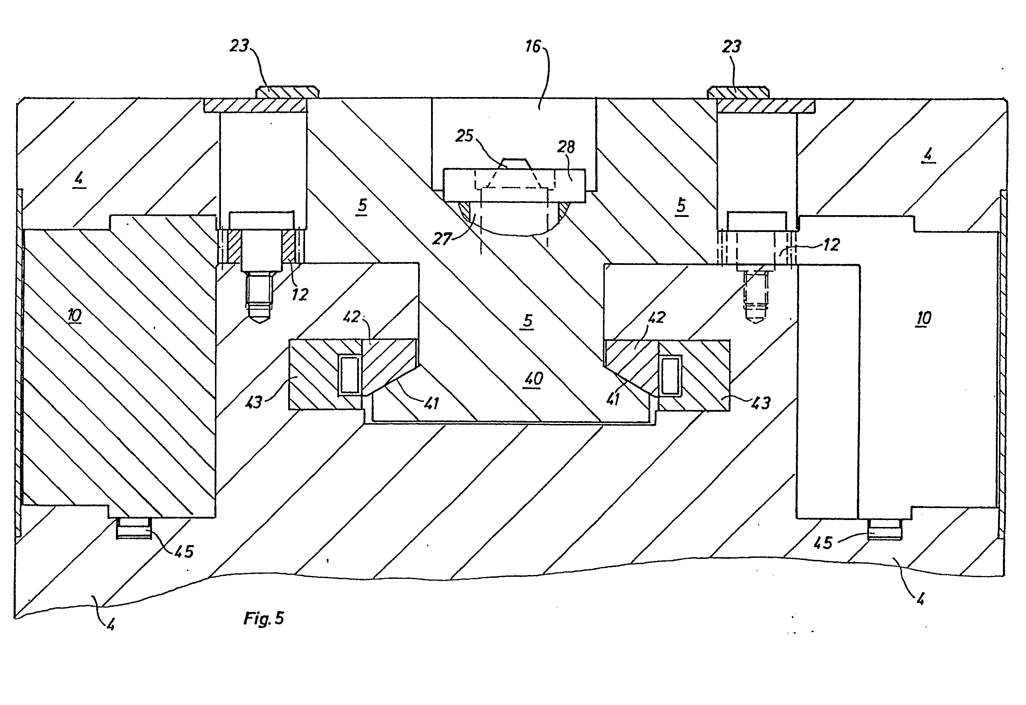

Fig. 5 den Schnitt V–V in Fig. 4,

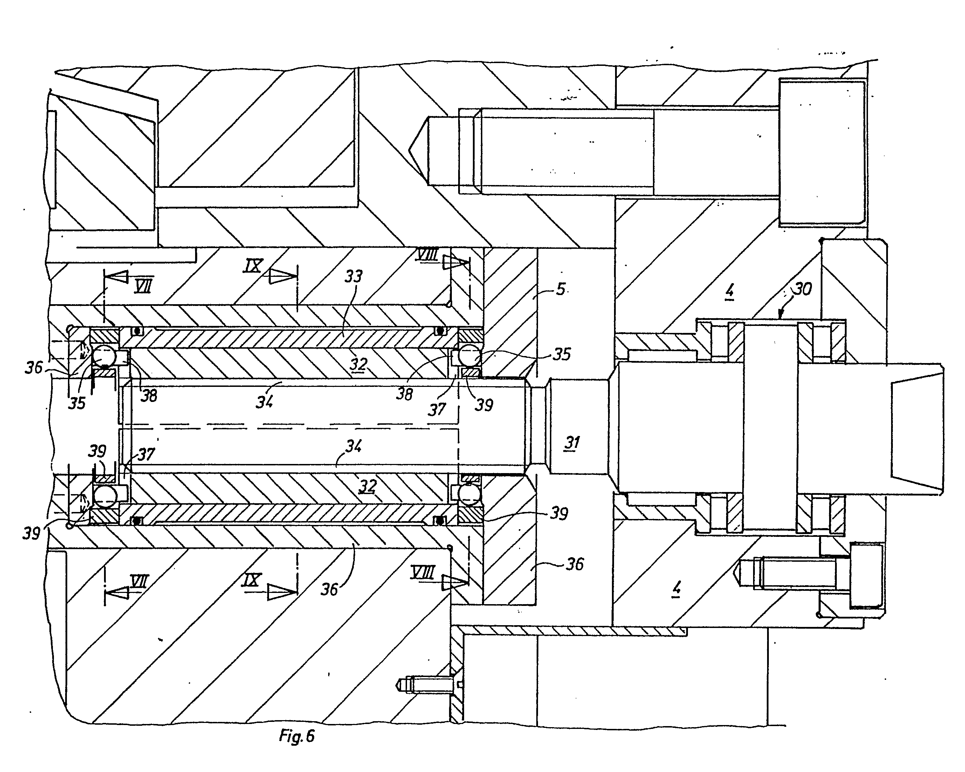

Fig. 6 einen die Stellspindel für den Spannkopf zeigenden Ausschnitt aus Fig. 3 in vergrößerter Darstellung,

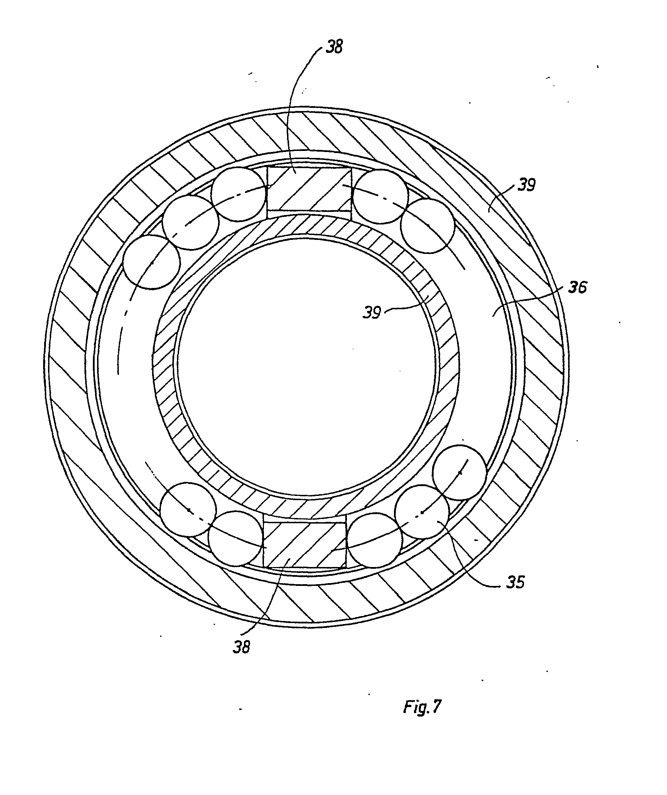

Fig. 7 den Schnitt VII–VII in Fig. 6,

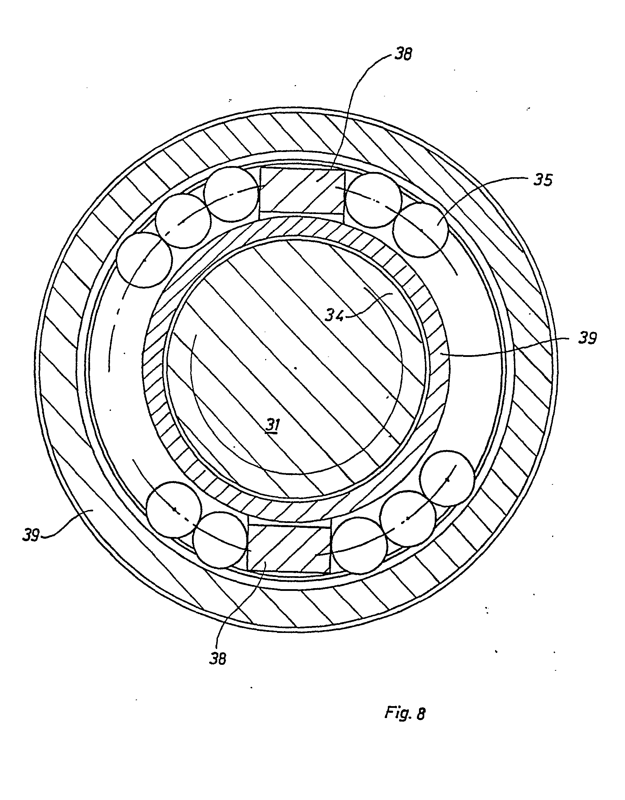

Fig. 8 den Schnitt VIII–VIII in Fig. 6, und

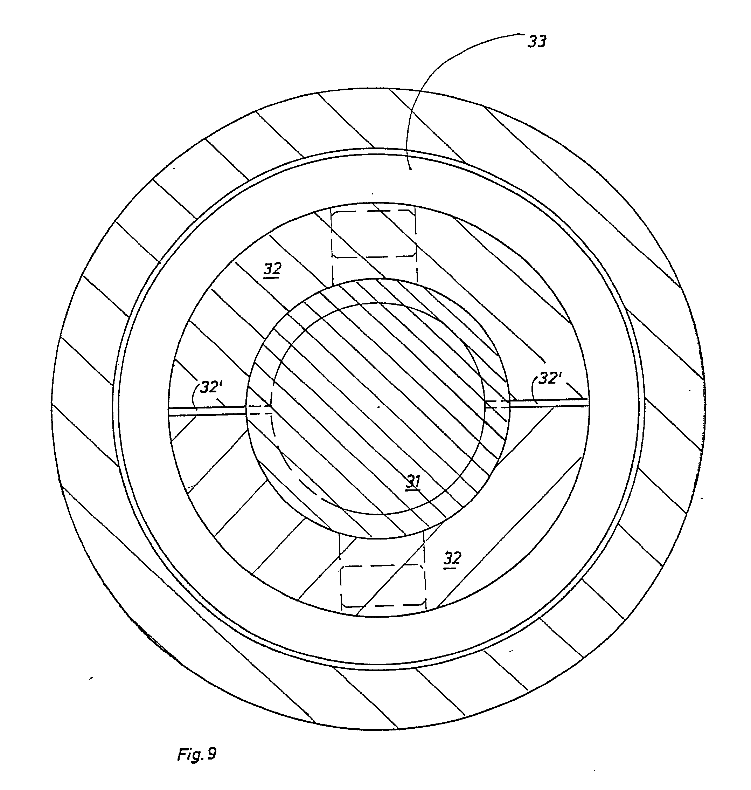

Fig. 9 den Schnitt IX–IX in Fig. 6.

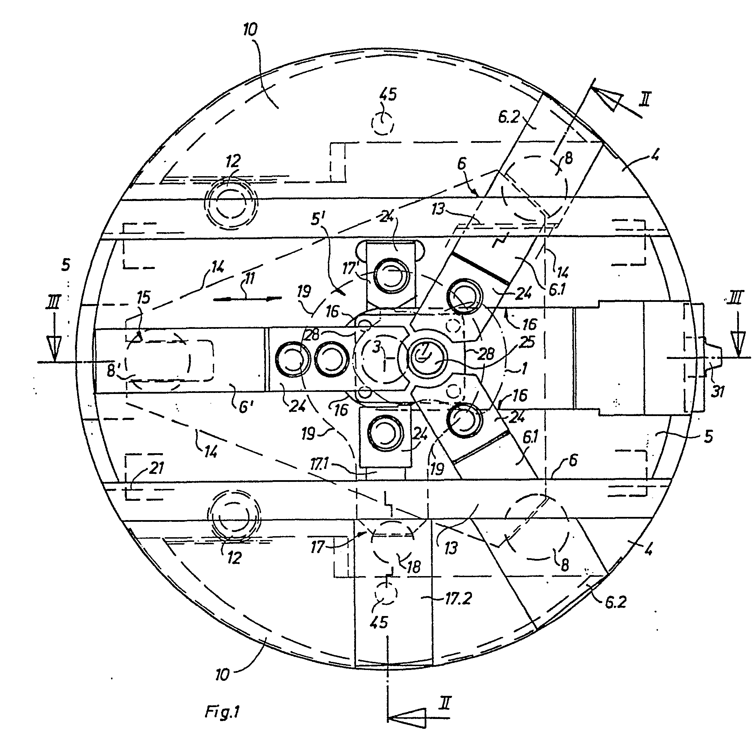

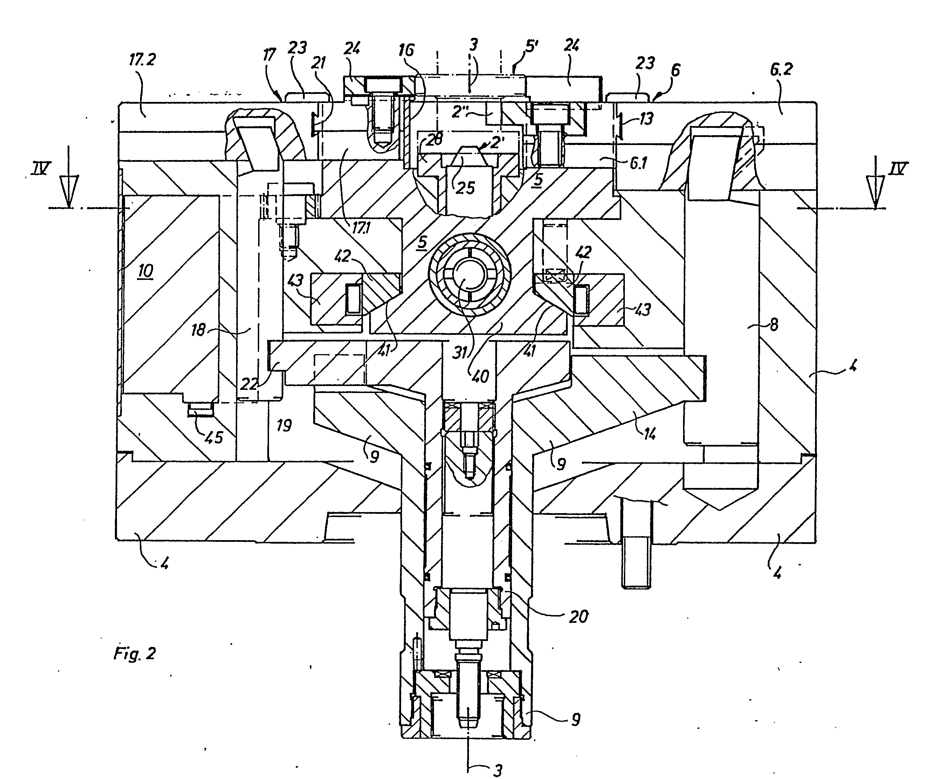

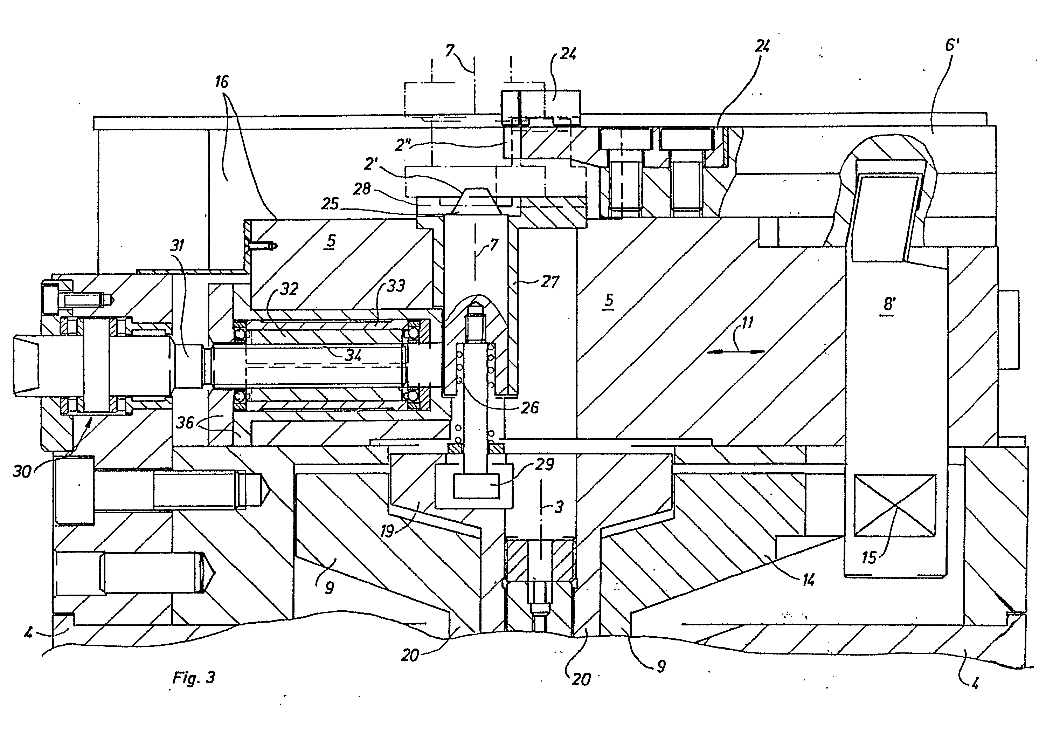

Das Backenspannfutter dient zum exzentrischen Spannen von Kurbelwellen, deren axial gesehener Umriß bei 1 in Fig. 1 gestrichelt angedeutet ist. Die Kurbelwellen werden eingespannt, wie in den Fig. 2 und 3 bei jeweils 2′, 2″ angedeutet.

Das Backenspannfutter besteht seinem grundsätzlichen Aufbau nach aus einer koaxial auf einer Drehmaschinenspindel mit Drehachse 3 befestigbaren Futterbasis 4 und einem allgemein mit 5′ bezeichneten Spannkopf mit Spannbacken 6, 6′, die radial zu einer mit der Drehachse 3 parallelen Spannachse 7 verschiebbar geführt und über axial bewegliche Keilstangen 8, 8′ an einen in der Futterbasis 4 axial verstellbaren, ringförmigen Treibkolben 9 angeschlossen sind. Der Spannkopf 5′ besitzt einen Spannkopfkörper 5, der in Richtung des Doppelpfeiles 11 quer zur Drehachse 3 und parallel zu der durch die Drehachse 3 und die Spannachse 7 gehenden Ebene, in Fig. 1 also der die horizontale Durchmesserebene des Spannfutters, verschiebbar an der Futterbasis 4 geführt ist. Weiter sind in gleicher Richtung wie der Spannkopfkörper 5 verstellbare Unwuchtausgleichsgewichte 10 vorgesehen, die zur Kompensation der durch die Verschiebung des Spannkopfes 5' entstehenden Unwuchten dienen. Die Verschiebung des Spannkopfes 5' erfolgt entsprechend der Größe des Kurbelhubs der zu bearbeitenden Kurbelwelle. Im Ausführungsbeispiel kann der Spannkopf 5' mit seiner Spannachse 7 gegenüber der Drehachse 3 der Futterbasis 4 zwischen einer Exzentrizität von 25 bis 50 mm verschoben werden, so daß Kurbelwellen mit einem Kurbelhub von 50 bis 100 mm bearbeitet werden können.

Der Spannkopfkörper 5 ist als Schieber ausgebildet, dessen Breite quer zur Verschiebungsrichtung 11 kleiner als der Durchmesser der Futterbasis 4 ist. Dadurch entsteht an der Futterbasis 4 beidseits des Spannkopfkörpers 5 Platz für die Anordnung der Unwuchtausgleichsgewichte 10, die parallel zum Spannkopfkörper 5 an der Futterbasis 4 geführt und durch je ein Zahnrad 12 gegenläufig mit dem Spannkopfkörper 5 verbunden sind, so daß eine Verschiebung des Spannkopfkörpers 5 automatisch eine gegenläufige entsprechende Verschiebung der Unwuchtausgleichsgewichte 10 ergibt. Diejenigen Spannbacken 6, deren Führungsrichtung gegenüber der des Spannkopfkörpers 5 geneigt ist, sind jeweils in ein inneres Backenteil 6.1 und ein äußeres Backenteil 6.2 getrennt. Das innere Backenteil 6.1 ist nur im Spannkopfkörper 5, das äußere Backenteil 6.2 mit der an ihm angreifenden Keilstange 8 nur in der Futterbasis 4 geführt. Beide Backenteile 6.1, 6.2 sind in einer im Querprofil schwalbenschwanzförmig ausgebildeten Geradführung 13 formschlüssig verbunden, die parallel zur Verschiebungsrichtung des Spannkopfkörpers 5 verläuft. Wird also der Spannkopfkörper 5 verschoben, können sich die inneren Spannbacken 6.1 entsprechend gegenüber ihren äußeren Spannbacken 6.2 verschieben, wobei die formschlüssige Verbindung beider Backenteile 6.1, 6.2 in der Geradführung 13 erhalten bleibt, so daß jede Verstellung der äußeren Spannbacken 6.2 eine entsprechende Verstellung der inneren Spannbacken 6.1 ergibt, unabhängig von der jeweiligen Einstellung des Spannkopfkörpers 5. Die parallel zur Verschiebungsrichtung 11 des Spannkopfkörpers 5 geführte Spannbacke 6' ist ohne die bei den anderen beiden Spannbacken 6 vorgesehene Trennung in ein inneres und ein äußeres Backenteil 6.1, 6.2 einstückig ausgebildet. Diese Spannbacke 6' ist mit ihrer Keilstange 8' nur im Spannkopfkörper 5 geführt. Ihre Keilstange 8' ist axial formschlüssig, in Verschiebungsrichtung 11 des Spannkopfkörpers 5 aber verschiebbar an einer auch die Keilstangen 8 für die anderen Spannbacken 6 mit dem Treibkolben 9 verbindenden Spannplatte 14 bei 15 eingehängt, so daß diese Keilstange 8' relativ zur Spannplatte 14 an der Bewegung des Spannkopfes 5' teilnehmen kann. Die Spannplatte 14 ist einstückig mit dem Treibkolben 9 ausgebildet.

Im Spannkopfkörper 5 ist eine Aussparung 16 zur Aufnahme des Kurbelwellenendes vorgesehen. Diese Aussparung 16 öffnet sich radial zum Spannfutterrand hin in der Verschiebungsrichtung 11 des Spannkopfes 5'. Quer dazu befinden sich beidseits der Aussparung 16 im Bereich der Drehachse 3 Richtbacken 17, 17', von denen die Richtbacke 17' am Spannkopfkörper 5 fest angeordnet, die andere Richtbacke 17 quer zur Verschiebungsrichtung 11 des Spannkopfes 5' beweglich geführt ist. Auch diese bewegliche Richtbacke 17 ist in ein nur im Spannkopfkörper 5 geführtes inneres Backenteil 17.1 und in ein äußeres Backenteil 17.2 getrennt, das mit einer eigenen Keilstange 18 und einem die Richtbacke 17 betägigenden eigenen Treibkolben 20 in der Futterbasis 4 geführt und mit dem inneren Backenteil 17.1 ebenfalls in einer schwalbenschwanzförmig ausgebildeten Geradführung 21 formschlüssig verbunden ist, wobei die Geradführung 21 wiederum parallel zur Verschiebungsrichtung 11 des Spannkopfkörpers 5 verläuft. Daher kann auch hier das innere Richtbackenteil 17.1 an der Verschiebung des Spannkopfes 5' teilnehmen und in seiner eigenen Führungsrichtung doch formschlüssig mit dem äußeren Richtbackenteil 17.2 verbunden bleiben, so daß auch hier wie bei den entsprechenden Spannbacken 6 das innere Richtbackenteil 17.1 unabhängig von der jeweiligen Einstellung des Spannkopfes 5 an den Bewegungen des äußeren Richtbackenteils 17.2 teilnimmt. Die Verbindung zwischen der Keilstange 18 und dem Treibkolben 20 geschieht durch eine Spannplatte 19, an der die Keilstange 18 bei 22 axial formschlüssig, in Verschiebungsrichtung 11 des Spannkopfes 5' aber verschiebbar eingehängt ist. Auch hier ist die Spannplatte 19 einstückig mit dem Treibkolben 10 ausgebildet.

Im einzelnen sind die äußeren Backenteile 6.2, 17.2 in Verschiebungsrichtung 11 des Spannkopfes 5 gesehen um mindestens dessen Verschiebungshub breiter als die inneren Backenteile 6.1, 17.1, so daß die inneren Backenteile 6.1, 17.1 beim Öffnen des Spannfutters, also beim radialen Zurückziehen der äußeren Backenteile 6.2, 17.2 in die Führungsaussparungen für diese äußeren Backenteile an der Futterbasis 4 eintreten können, und zwar über den gesamten möglichen Verstellhub des Spannkopfes 5' hinweg. Zur Abdeckung der Führungsfugen zwischen dem Spannkopfkörper 5 und der Futterbasis 4 sind auf letztere stirnseitig aufgeschraubte Abdeckleisten 23 vorgesehen, welche auch die Geradführungen 13, 21 zwischen den inneren und äußeren Backenteilen sowohl an den Spannbacken 6 wie an der beweglichen Richtbacke 17 übergreifen. Alle das Werkstück unmittelbar berührenden Backen (Spannbacken und Richtbacken) tragen auf das durch das Werkstück vorgegebene Maß gebrachte Aufsatzteile 24.

Im Spannkopfkörper 5 ist in der Spannachse 7 eine Zentrierspitze 25 angeordnet, die gegen den Druck einer Feder 26 axial verschiebbar in einer Hülse 27 geführt ist, die mittels eines Flansches 28, der zugleich den Werkstück-Längsanschlag bildet, am Spannkopfkörper 5 befestigt ist. Es besteht die Möglichkeit, die Zentrierspitze 25 über einen Bolzen 29 mit Hilfe der auch für die Richtbacke 17 vorgesehenen Spannplatte 19 axial zurückzuziehen. Die beiden Treibkolben 9, 20 (für Richtbacken bzw. Spannbacken) sind als Ringkolben koaxial ineinander angeordnet. Sie werden durch in der Maschinenspindel geführte und in der Zeichnung nicht dargestellte Spannanker betätigt.

Der Spannkopfkörper 5 ist in seiner Schieberführung mit Hilfe einer axial bei 30 unverschiebbar und spielfrei an der Futterbasis 4 gelagerten Stellspindel 31 verstellbar. Die von außerhalb des Spannfutters zu betätigende Stellspindel 31 läuft in einer axial ebenfalls spielfrei und auch undrehbar im Spannkopfkörper 5 angeordneten Spindelmutter 32. Diese Spindelmutter 32 ist durch Schlitze 32' in einer Durchmesserebene zweigeteilt und kann mittels einer die Spindelmutter 32 umschließenden hydraulisch zu betätigenden Klemmhülse 33 radial auf der Stellspindel 31 zusammengedrückt werden, so daß jegliches Spiel zwischen den Gewindegängen der Stellspindel 31 und der Spindelmutter 32 ausgeschaltet werden kann. Dabei ist das Gewinde 34 der Stellspindel 31 und Spindelmutter 32 als Trapezgewinde ausgebildet. Die beiden Teile der Spindelmutter 32 liegen stirnseitig beidseits über Kugeln 35, die das eben beschriebene radiale «Atmen» der Spindelmutterteile ermögliche, am Spannkopfkörper 5, bzw. an einem fest darin eingesetzten Rinflansch 36 und Deckel 36' an und besitzen an ihrer Stirnseite Radialnuten 37, in die am Spannkopfkörper 5 dem Ringflansch 36 und Deckel 36' vorgesehene feste Sicherungsnocken 38 zwischen den Kugeln 35 hindurch eingreifen und die Verdrehsicherung bewirken. Die Kugeln 35 bewirken die axial spielfreie Abstützung der Spindelmutter 32 im Spannkopfkörper 5 und sind zwischen Ringen 39 gehalten.

Die Schieberführung des Spannkopfkörpers 5 in der Futterbasis 4 ist im wesentlichen schwalbenschwanzartig ausgebildet. An den beiden Keilflächen 41 des Schwalbenschwanzes 40 liegen distanzüberbrückende Keilleisten 42 an. Diese Keilleisten 42 können mit Hilfe hydraulisch betätigbarer Klemmleisten 43 zwischen der Futterbasis 4 und dem Spannkopfkörper 5 quer zu dessen Verschiebungsrichtung 11 verspannt werden, und zwar reaktionsfrei, so daß die durch die Stellspindel 31 erreichte Positioniergenauigkeit durch die Fixierung des Spannkopfkörpers 5 nicht beeinträchtigt wird.

Die Zahnräder 12 zwischen dem Spannkopfkörper 5 und den Unwuchtausgleichsgewichten 10 sind in der Futterbasis 4 achsenparallel zur Drehachse 3 gelagert. Jedes Zahnrad 12 steht einerseits am Spannkopfkörper 5 und andererseits am Unwuchtausgleichsgewicht 10 in Zahnreihen 44 im Eingriff, die in Verschiebungsrichtung 11 verlaufen. Die Verschiebung des Spannkopfkörpers 5 in der einen Richtung führt zur Verschiebung der Unwuchtausgleichsgewichte 10 in der entgegengesetzten Richtung. Dabei sind die Unwuchtausgleichsgewichte 10 so dimensioniert, daß sie die durch die Verschiebung des Spannkopfes auftretende Massenverlagerung einschließlich des Werkstückgewichtes möglichst weitgehend kompensieren. Die verbleibende Restunwucht, die nie gänzlich vermieden werden kann, muß von der Drehmaschinenspindel bzw. ihren Lagern aufgenommen werden. Um ein «Aufschwingen» der Unwuchtausgleichsgewichte 10 zu verhindern, sind sie in ihrer Führung in der Futterbasis 4 feststellbar, wozu hydraulisch betätigbare Klemmscheiben 45 vorgesehen sind, welche die Unwuchtausgleichsgewichte 10 im wesentlichen axial gegen die Futterbasis 4 verspannen und in ihren Führungen im Reibungssitz festklemmen. Der hydraulische Druck für diese Klemmscheiben 45 wird derselben Leitung entnommen, die auch die Klemmleisten 42 speist. Jedoch müssen die Klemmleisten 42 und Klemmscheiben 45 einerseits und die Klemmhülse 33 andererseits getrennt voneinander hydraulisch angesteuert werden können.

Die äußeren Backenteile 6.2 der Spannbacken 6 können außer im Spannhub auch in einem Eilhub betätigt werden, während für die ungeteilte und nur im Spannkopf 5 geführte Spannbacke 6' lediglich ein Spannhub vorgesehen ist.

**Patentansprüche**

1. Kraftbetätigtes Backenspannfutter für exzentrisch zu spannende Werkstücke, insbesondere Kurbelwellen, mit einer koaxial auf einer Drehmaschinenspindel befestigbaren Futterbasis (4), einem Spannkopf (5'), der radial zu einer mit der Drehachse (3) parallelen Spannachse (7) verschiebbar geführte und über axial bewegliche Keilstangen (8, 8') an einen in der Futterbasis (4) axial verstellbaren Treibkolben (9) angeschlossene Spannbacken (6, 6') und einen Spannkopfkörper (5) aufweist, der quer zur Drehachse (3) und parallel zu der durch die Drehachse (3) und die Spannachse (7) gehenden Ebene verschiebbar an der Futterbasis (4) geführt ist, und mit in gleicher Richtung wie der Spannkopfkörper (5) verstellbaren Unwuchtausgleichsgewichten (10), dadurch gekennzeichnet, daß der Spannkopfkörper (5) als Schieber ausgebildet ist, dessen Breite quer zur Verschiebungsrichtung (11) kleiner als der Durchmesser der Futterbasis (4) ist, daß die beidseits des Spannkopfkörpers (5) an der Futterbasis (4) angeordneten und geführten Unwuchtausgleichsgewichte (10) durch je ein Getriebe gegenläufig mit dem Spannkopfkörper (5) verbunden sind, und daß die Spannbacken (6) mit gegenüber der des Spannkopfkörpers (5) geneigter Verschiebungsrichtung in ein inneres Backenteil (6.1) und ein äußeres Backenteil (6.2) getrennt sind, von welchen das innere Backenteil (6.1) im Spannkopfkörper (5) und das äußere Backenteil (6.2) mit der an ihm angreifenden Keilstange (8) in der Futterbasis (4) geführt sind und beide Backenteile (6.1, 6.2) in einer durch Hinterschneidung formschlüssigen und parallel zur Verschiebungsrichtung (11) des Spannkopfkörpers (5) verlaufenden Geradführung (13) miteinander im Eingriff stehen.

2. Spannfutter nach Anspruch 1, dadurch gekennzeichnet, daß bei Führung einer der Spannbacken (6, 6') in derselben Richtung (11) wie der Spannkopfkörper (5) diese Spannbacke (6') ohne Trennung in inneres und äußeres Backenteil einstückig ausgebildet und mit ihrer Keilstange (8') nur im Spannkopfkörper (5) geführt ist, und daß ihre Keilstange (8') axial formschlüssig, in Verschiebungsrichtung (11) des Spannkopfkörpers (5) aber verschiebbar, an einer auch die Keilstangen (8) für die anderen Spannbacken (6) mit dem Treibkolben (9) verbindenden Spannplatte (14) eingehängt ist.

3. Spannfutter nach Anspruch 1 oder 2, dadurch gekennzeichnet, daß bei einem Spannkopf (5') mit beweglicher Richtbacke (17) auch diese in ein im Spannkopfkörper (5) geführtes inneres Backenteil (17.1) und in ein äußeres Backenteil (17.2) getrennt ist, das mit seiner Keilstange (18) und einem die Richtbacke (17) betätigenden Treibkolben (20) in der Futterbasis (4) geführt und mit dem inneren Backenteil (17.1) in einer durch Hinterschneidung formschlüssigen und parallel zur Verschiebungsrichtung (11) des Spannkopfkörpers (5) verlaufende Geradführung (21) in Eingriff steht.

4. Spannfutter nach einem der Ansprüche 1 bis 3, dadurch gekennzeichnet, daß die äußeren Backenteile (6.2, 17.2) in Verschiebungsrichtung (11) des Spannkopfes (5') gesehen um mindestens dessen Verschiebungshub breiter als die inneren Backenteile (6.1, 17.1) sind und letztere bei offenem Spannfutter in die Führungsaussparungen für die äußeren Backenteile (6.2, 17.2) eintreten.

5. Spannfutter nach einem der Ansprüche 1 bis 4, dadurch gekennzeichnet, daß der Spannkopfkörper (5) in seiner Schieberführung mittels einer axial unverschiebbar und spielfrei an der Futterbasis (4) gelagerten Stellspindel (31) verstellbar ist, die in einer axial spielfrei und undrehbar im Spannkopfkörper (5) angeordneten Spindelmutter (32) läuft, die in einer Durchmesserebene zweigeteilt und mittels einer die Spindelmutter (32) umschließenden druckmittelbetätigten Klemmhülse (33) radial auf der Stellspindel (31) zusammendrückbar ist.

6. Spannfutter nach Anspruch 5, dadurch gekennzeichnet, daß die beiden Spindelmutterteile stirnseitig beidseits über Kugeln (35) am Spannkopfkörper (5) anliegen und Radialnuten (37) aufweisen, in die am Spannkopfkörper (5) feste Sicherungsnocken (38) zwischen den Kugeln (35) hindurch eingreifen.

7. Spannfutter nach Anspruch 5 oder 6, dadurch gekennzeichnet, daß das Gewinde (34) von Stellspindel (31) und Spindelmutter (32) als Trapezgewinde ausgebildet ist.

8. Spannfutter nach einem der Ansprüche 1 bis 7, dadurch gekennzeichnet, daß die Schieberführung des Spannkopfkörpers (5) in der Futterbasis (4) schwalbenschwanzartig ausgebildet ist und den Keilflächen (41) des Schwalbenschwanzes (40) distanzüberbrückende Keilleisten (42) anliegen, die mittels druckmittelbetätigter Klemmleisten (43) zwischen der Futterbasis (4) und dem Spannkopfkörper (5) quer zu seiner Verschiebungsrichtung (11) verspannbar sind.

9. Spannfutter nach einem der Ansprüche 1 bis 8, dadurch gekennzeichnet, daß das Getriebe zwischen dem Spannkopfkörper (5) und den Unwuchtausgleichsgewichten (10) durch je ein in der Futterbasis (4) achsenparallel zur Drehachse (3) gelagertes Zahnrad (12) gebildet ist, das am Spannkopfkörper (5) und am Unwuchtausgleichsgewicht (10) in in deren Verschiebungsrichtung (11) verlaufenden Zahnreihen (44) im Eingriff steht.

10. Spannfutter nach einem der Ansprüche 1 bis 9, dadurch gekennzeichnet, daß die Unwuchtausgleichsgewichte (10) in ihrer Führung in der Futterbasis (4) durch Reibungssitz feststellbar und hierfür druckmittelbetätigte Klemmscheiben (45) vorgesehen sind, die das Unwuchtausgleichsgewicht (10) gegen die Futterbasis (4) verspannen.

## Claims

1. Power actuated jaw chuck for workpieces which are to be clamped eccentrically, in particular cams, having a chuck base (4) fixable coaxially on a lathe spindle, a clamping head (5'), which has clamping jaws (6, 6'), which are displaceably guided radial to a clamping axis (7) parallel to the axis of rotation (3) and which are connected via axially movable key rods (8, 8') to an axially adjustable drive cam (9) in the chuck base (4), and having a clamping head body (5), which is displaceably guided in the chuck base transverse to the axis of rotation (3) and parallel to the plane extending through the axis of rotation (3) and the clamping axis (7), and having adjustable balancing weights (10) adjustable in the same direction as the clamping head body (5), characterised in that the clamping head body (5) is formed as a slide whose width transverse to the direction of displacement (11) is smaller than the diameter of the chuck base (4), in that the balancing weights (10) disposed and guided on both sides of the clamping head body (5) on the chuck base (4) are connected by one drive each so as to run in the opposite direction to the clamping head body (5), and in that the clamping jaws (6) with a direction of movement inclined opposite to that of the clamping head body (5) are divided into an inner jaw member (6.1) and an outer jaw member (6.2), of which the inner jaw member (6.1) is guided in the clamping head body (5) and the outer jaw member (6.2) is guided in the chuck base (4) with the key rod (8) engaging with the said jaw member (6.2), and both jaw members (6.1, 6.2) are meshed together in a guide bar (13) extending in a positively locking manner by means of an undercut and parallel to the displacement direction (11) of the clamping head body (5).

2. A chuck according to claim 1, characterised in that in the guiding of one of the clamping jaws (6, 6') in the same direction (11) as the clamping head body (5), this clamping jaw (6') is formed in one piece, without being divided into an inner and outer jaw member, and is guided with its key rod (8') only in the clamping head body (5), and in that its key rod (8′) is coupled with axial positive locking, but displaceably in the displacement direction (11) of the clamping head body (5), on a clamping plate (14) which also connects the key rods (8) for the other clamping jaws (6) to the drive cam (9).

3. A chuck according to claim 1 or 2, characterised in that, in a clamping head (5′) with a movable alignment jaw (17), the latter is also divided into an inner jaw member (17.1), which is guided in the clamping head body (5), and an outer jaw member (17.2), which is guided with its key rod (18) and a drive cam actuating the alignment jaw (17) in the chuck base (4) and which meshes with the inner jaw member (17.1) in a guide bar (21) extending with positive locking by means of an undercut and parallel to the displacement direction (11) of the clamping head body (5).

4. A chuck according to one of claims 1 to 3, characterised in that the outer jaw members (6.2, 17.2), seen in the displacement direction (11) of the clamping head (5′), are wider by at least its span of movement than the inner jaw members (6.1, 17.1) and the latter enter the guide recesses for the outer jaw members (6.2, 17.2) when the chuck is open.

5. A chuck according to one of claims 1 to 4, characterised in that the clamping head body (5) is adjustable in its slide guide by means of an axially indisplaceable adjusting spindle (31) mounted without play on the chuck base (4), this adjusting spindle (31) extending in a spindle nut (32), which is mounted non-rotatably and without axial play in the clamping head body (5) and which is divided into two in a diametral plane and can be pushed together radially on the adjusting spindle by means of a pneumatically actuated clamping sleeve (33) enclosing the spindle nut (32).

6. A chuck according to claim 5, characterised in that the two spindle nut members abut the clamping head body (5) with their end face on both sides via balls (35) and have radial grooves (37), into which fixing cams (38) rigidly connected to the clamping head body (5) engage between the balls (35).

7. A chuck according to claim 5 or 6, characterised in that the thread (34) for the adjusting spindle (31) and the spindle nut (32) is a trapezoidal thread.

8. A chuck according to one of claims 1 to 7, characterised in that the slide guide of the clamping head body (5) in the chuck base has a dovetail form, and distance-bridging wedge bars (42) abut the wedge faces (41) of the dovetail (40) and may be braced between the chuck base (4) and the clamping head body (5) transversely to its displacement direction (11) by means of pneumatically actuated clamping bars (43).

9. A chuck according to one of claims 1 to 8, characterised in that the drive between the clamping head body (5) and the balancing weights (10) is formed in each case by a toothed wheel (12) mounted in the chuck base (4), axially parallel to the axis of rotation (3), this toothed wheel (12) meshing with racks (44) extending on the clamping head body (5) and the balancing weight (10) in the displacement direction (11) thereof.

10. A chuck according to one of claims 1 to 9, characterised in that the balancing weights (10) are lockable in their guide in the chuck base (4) by a friction fit, and to this end pneumatically actuated clamping disks (45) are provided, which clamp the balancing weight (10) against the chuck base (4).

## Revendications

1. Mandrin de serrage à mâchoires actionné par une source d'énergie extérieure pour des pièces à usiner demandant une fixation excentrique, en particulier des vilebrequins, comprenant une base de mandrin (4) pouvant être fixée coaxialement sur un arbre de tour, une tête de serrage (5′) qui comporte des mâchoires de serrage (6, 6′) guidées de manière à pouvoir être déplacées radialement par rapport à un axe de serrage (7) parallèle à l'axe de rotation (3) et rattachées, par l'intermédiaire de barres de clavetage (8, 8′) mobiles dans le sens axial, à un piston d'entraînement (8) déplaçable axialement dans la base du mandrin (4), et un corps de tête de serrage (5) lequel est guidé transversalement à l'axe de rotation (3) et parallèlement au plan passant par l'axe de rotation (3) et l'axe de serrage (7), de façon à pouvoir être déplacé sur la base du mandrin (4), et des poids de compensation de balourd (10) déplaçables dans le même sens que le corps de tête de serrage (5), caractérisé en ce que le corps de tête de serrage (5) est conformé en coulisseau dont la largeur transversalement à la direction de déplacement (11) est inférieure au diamètre de la base du mandrin (4), que les poids de compensation de balourd (10) disposés et guidés de part et d'autre du corps de tête de serrage (5) sur la base du mandrin (4) sont couplés chacun par un engrenage en sens opposé au corps de tête de serrage (5), et que les mâchoires de serrage (6) avec une direction de déplacement inclinée par rapport au corps de tête de serrage (5) sont divisées en un élément de mâchoire intérieur (6.1) et un élément de mâchoire extérieur (6.2), l'élément de mâchoire intérieur (6.1) étant guidé dans le corps de tête de serrage (5) et l'élément de mâchoire extérieur (6.2) avec la barre de clavetage (8) en contact avec celui-ci, dans la base du mandrin (4) et les deux éléments de mâchoire (6.1, 6.2) étant en prise l'un avec l'autre dans un guidage droit (13) à engagement positif du fait d'une contre-dépouille et orientés parallèlement à la direction de déplacement (11) du corps de tête de serrage (5).

2. Mandrin de serrage selon la revendication 1, caractérisé en ce que, lorsque l'une des mâchoires de serrage (6, 6′) est guidée dans le même sens (11), que le corps de tête de serrage (5), cette mâchoire de serrage (6′) est constituée d'une seule pièce, sans séparation en un élément de mâchoire intérieur et un élément de mâchoire extérieur, et uniquement guidée avec sa barre de clavetage (8′) dans le corps de tête de serrage (5), et que sa barre de clavetage (8′) est fixée à engagement positif dans le sens axial, mais de manière mobile dans la direction de déplacement (11) du corps de tête de serrage (5), sur une plaque de serrage (14) qui assure également la liaison entre les barres de clavetage (8) pour les autres mâchoires de serrage (6) et le piston d'entraînement (9).

3. Mandrin de serrage selon l'une des revendications 1 ou 2, caractérisé en ce que, pour une tête de serrage (5′) avec une mâchoire d'alignement mobile (17), cette mâchoire est partagée, elle aussi, en un élément de mâchoire intérieur (17.1) guidé dans le corps de tête de serrage (5) et un élément de mâchoire extérieur (17.2) qui est guidé, avec sa barre de clavetage (18) et un piston d'entraînement (20) actionnant ladite mâchoire d'alignement (17), dans la base du mandrin (4) et en prise avec l'élément de mâchoire intérieur (17.1) dans un guidage droit (21) présentant un engagement positif du fait d'une contre-dépouille et orienté parallèlement à la direction de déplacement (11) du corps de tête de serrage (5).

4. Mandrin de serrage selon l'une des revendications 1 à 3, caractérisé en ce que, vu dans le sens de déplacement (11) de la tête de serrage (5′), les éléments de mâchoire extérieurs (6.2, 17.2) sont plus larges d'au moins la course de déplacement de ladite tête de serrage que les éléments de mâchoire intérieurs (6.1, 17.1) et que ces derniers s'engagent dans les évidements de guidage pour les éléments de mâchoire extérieurs (6.2, 17.2) lorsque le mandrin de serrage est ouvert.

5. Mandrin de serrage selon l'une des revendications 1 à 4, caractérisé en ce que le corps de tête de serrage (5) peut être déplacé dans sa coulisse au moyen d'une broche de commande (31) montée de manière immobile dans le sens axial et sans jeu sur la base du mandrin (4), qui coopère avec un écrou de broche (32) disposé sans jeu dans le sens axial et de manière rigide en rotation dans le corps de tête de serrage (5), lequel écrou de broche est divisé en deux dans un plan diamétral et peut être comprimé radialement sur la broche de commande (31) au moyen d'une douille de serrage (33) qui entoure ledit écrou de broche (32) et est actionné par un fluide sous pression.

6. Mandrin de serrage selon la revendication 5, caractérisé en ce que, des deux côtés, les deux parties de l'écrou sont appliquées avec leurs faces frontales contre le corps de tête de serrage (5) par l'intermédiaire de billes (35) et qu'elles présentent des rainures radiales (37) dans lesquelles s'engagent, entre les billes (35), des saillies d'arrêt (38) solidaires du corps de tête de serrage (5).

7. Mandrin de serrage selon l'une des revendications 5 ou 6, caractérisé en ce que le filetage (34) de la broche de commande (31) et de l'écrou de broche (32) est conformé en filet trapézoïdal.

8. Mandrin de serrage selon l'une des revendications 1 à 7, caractérisé en ce que le guidage coulissant du corps de tête de serrage (5) dans la base du mandrin (4) est réalisé sous la forme d'une queue d'aronde et que contre les surfaces de clavette (41) de la queue d'aronde (40) sont appliqués des liteaux d'espacement à clavette (42) qui, au moyen de baguettes de serrage (43) actionnées par un fluide sous pression et placées entre la base du mandrin (4) et le corps de tête de serrage (5), peuvent être bloqués transversalement à la direction de déplacement (11) de ce dernier.

9. Mandrin de serrage selon l'une des revendications 1 à 8, caractérisé en ce que l'engrenage entre le corps de tête de serrage (5) et les poids de compensation de balourd (10) est constitué par respectivement une roue dentée (12) montée, avec son axe parallèle à l'axe de rotation (3), dans la base du mandrin (4), qui s'engrène sur le corps de tête de serrage (5) et sur le poids de compensation de balourd (10) avec des dentures (44) orientées dans la direction de déplacement (11) de ceux-ci.

10. Mandrin de serrage selon l'une des revendications 1 à 9, caractérisé en ce que les poids de compensation de balourd (10) peuvent être bloqués par ajustement à friction dans leur guidage dans la base du mandrin (4), et qu'il est prévu à cet effet des plaques de serrage (45) actionnées par un fluide sous pression qui bloquent le poids de compensation de balourd (10) contre la base du mandrin (4).

Fig.1

Fig. 2

EP 0 185 883 B1

Fig. 3

Fig. 4

Fig. 5

EP 0 185 883 B1

*Fig. 6*

EP 0 185 883 B1

Fig. 7

Fig. 8

Fig. 9